(19) Europäisches Patentamt / European Patent Office / Office européen des brevets

(11) **EP 3 069 790 A1**

(12) **EUROPEAN PATENT APPLICATION**
published in accordance with Art. 153(4) EPC

(43) Date of publication:
**21.09.2016 Bulletin 2016/38**

(21) Application number: **13897322.7**

(22) Date of filing: **12.11.2013**

(51) Int Cl.:
**B01L 3/02** (2006.01)     **G01F 13/00** (2006.01)
**G01F 25/00** (2006.01)     **G01N 1/00** (2006.01)

(86) International application number:
**PCT/JP2013/080544**

(87) International publication number:
**WO 2015/071956 (21.05.2015 Gazette 2015/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **A & D Company, Limited**
**Toshima-ku**
**Tokyo 170-0013 (JP)**

(72) Inventors:
• **IZUMO Naoto**
**Kitamoto-shi**
**Saitama 364-8585 (JP)**

• **FUKAMI Yuji**
**Kitamoto-shi**
**Saitama 364-8585 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND DEVICE FOR ACCURATE PIPETTE DISCHARGE VOLUME CALIBRATION**

(57)     To provide a method for calibrating a discharge volume of the pipette that enables accurate measurement of the discharge volume under arbitrary conditions, and to provide an apparatus therefor. The method including the steps of, setting a preset volume by the pipette that is actually used in a measurement (S1), sucking liquid that is actually used in the measurement into the pipette chip that is actually used in the measurement while aiming to be sucked the preset volume (S2), discharging the liquid sucked in the pipette chip onto a measuring apparatus (S3), determining an actual discharge volume of the pipette based on the weight measured (S4 to S6) and calculating a ratio between the preset volume and the actual discharge volume and correcting a sucking amount so as to bring the sucking amount to match an amount obtained by multiplying the preset volume by the ratio (S7 to S9).

Fig. 7

start

setting preset weight G0 in pipette — S41

sucking — S42

discharging onto measurement apparatus — S43

measuring weight by measurement apparatus and determining actual discharge weight G — S44

changing displayed weight to represent actual discharge weight G — S45

storing in data memory — S46

stop

## Description

### Technical Field

The present invention relates to a pipette acting as an apparatus for sucking and discharging a preset volume of liquid, and more particularly to a method for accurately calibrating a discharge volume of the pipette and a pipette therefor.

### Background Art

A pipette is well known measurement apparatus, having a function for discharging a constant volume of liquid by detecting a volumetric change of moving of air in the pipette caused by a move of a piston equipped in the pipette. The pipette sucks and discharges a volume of liquid that is equivalent to the volumetric change of the air in a pipette chip attached at the leading end of the pipette. In principles, the compressible air is utilized as a medium, the preset volume is influenced by an error, for example, resistance of the air in the air circuit, operational mode of the piston, configuration of the chip such as its length and the shape of the pointed end thereof, properties of the liquid such as hydrophobicity, hydrophilicity, hygroscopicity, or measurement environment including pressure, temperature, humidity. Therefore, it is important to calibrate a discharge volume of the pipette in use.

Generally, a "weight measurement method" is used in the calibration for the pipette. Distilled water is used in the calibration because the density of the distilled water is well known. However, in an actual measurement, there are few cases where the distilled water is measured by the pipette. Mostly, the measurement is performed by using various liquids including a solvent that has a viscosity lower than water and a gel-like liquid that has a high viscosity. In measurements, it is often the cases that a user selects a pipette which he feels easy to use and an arbitrarily chosen chip easy to purchase. Thus, measurement conditions at the measurement differ from those in the calibration, it is difficult to perform discharging accurately, furthermore, to secure its traceability.

An electric operation pipette (hereinafter, referred to as "electric pipette") is disclose in the Patent Publication 1 which utilizes calibration data of the tips, the liquids, and the measurement environment conditions stored in a data memory. The electric pipette selects from the stored calibration data may best fit the current conditions.

### Prior Technical Publications

### Patent Publications

Patent Publication 1: JP-A-2010-227933 (refer to the Claim 1 or the paragraph 0008)

### Summary of Invention

### Problems to Be Solved By Invention

However, in the pipette of the Patent Publication 1, each of different tips, liquids, and environmental conditions are stored, a large number of patterns are generated so that the selection of an appropriate pattern may be difficult. Furthermore, the pattern that is coincident with the current condition may not exist, then the pipette may not be reasonable to use on the site.

The present invention has been made based on the problems of the conventional art, and an object thereof is to provide a method for calibrating a discharge volume of the pipette that enables accurate measurement of the discharge volume under arbitrary conditions, and provide an apparatus therefor.

### Means of Solving Problems

To overcome prior art problems, it is an object of the present invention to provide a method for calibrating discharge volume of a pipette, the pipette including a cylinder that is capable of communicating with a pipette chip attached for sucking and discharging a preset amount of liquid, a piston that is vertically moveable in the cylinder, a driver for moving the piston, and a controller for controlling the driver, the method comprising the steps of, setting a preset volume by the pipette that is actually used in a measurement, sucking liquid that is actually used in the measurement into the pipette chip that is actually used in the measurement while aiming to be sucked the preset volume discharging the liquid sucked in the pipette chip onto a measuring apparatus that is adapted to measure weight of the liquid, determining an actual discharge volume of the pipette based on the weight measured, and calculating a ratio between the preset volume and the actual discharge volume and correcting a sucking amount so as to bring the sucking amount to match an amount obtained by multiplying the preset volume by the ratio.

It is another object of the present invention to provide a method for calibrating discharge volume of a pipette, the pipette including a cylinder that is capable of communicating with a pipette chip attached for sucking and discharging a preset amount of liquid, that is vertically moveable in the cylinder, a driver for moving the piston, and a controller for controlling the driver, the method comprising the steps of, setting a preset weight by the pipette that is actually used in a measurement, sucking liquid that is actually used in the measurement into the pipette chip that is actually used in the measurement while aiming to be sucked the preset weight, discharging the liquid sucked in the pipette chip onto a measuring apparatus that is adapted to measure weight of the liquid, determining an actual discharge weight of the pipette from the weight measured, and calculating a ratio between the preset weight and the actual discharge weight and correcting a sucking amount so as to bring the sucking amount to match an amount obtained by multiplying the preset weight by the ratio.

It is a further object of the present invention to provide a method for calibrating discharge volume of a pipette, the pipette including a cylinder that is capable of communicating with a pipette chip attached for sucking and discharging a preset amount of liquid, a piston that is vertically moveable in the cylinder, a driver for moving the piston, and a controller for controlling the driver, the method comprising the steps of, setting and displaying a preset volume by the pipette that is actually used in a measurement, sucking liquid that is actually used in the measurement into the pipette chip that is actually used in the measurement while aiming to be sucked the preset volume, discharging the liquid sucked in the pipette chip onto a measuring apparatus that is adapted to measure weight of the liquid, determining an actual discharge volume of the pipette based on the weight measured, and correcting a displayed volume by defining the actual discharge volume as an accurate amount.

It is still further object of the present invention to provide a method for calibrating discharge volume of a pipette, the pipette including a cylinder that is capable of communicating with a pipette chip attached for sucking and discharging a preset amount of liquid, a piston that is vertically moveable in the cylinder, a driver for moving the piston, and a controller for controlling the driver, the method comprising the steps of, setting and displaying a preset weight by the pipette that is actually used in a measurement, sucking liquid that is actually used in the measurement into the pipette chip that is actually used in the measurement while aiming to be sucked the preset weight, discharging the liquid sucked in the pipette chip onto a measuring apparatus that is adapted to measure weight of the liquid, determining an actual discharge weight of the pipette from the weight measured, and correcting a displayed weight by defining the actual discharge weight as an accurate amount.

It is an object of the present invention to provide an electric pipette comprising, a cylinder that is capable of communicating with a pipette chip attached for sucking and discharging a preset amount of liquid, a piston that is vertically moveable in the cylinder, a rotary motor for driving the piston, an arithmetic processing device for calculating and controlling rotating speed of the motor, a user interface that is equipped with a display, a means, provided in the user interface, for setting a preset volume, a means, provided in the arithmetic processing device, for determining an actual discharge volume of the pipette based on weight of liquid measured by a measuring apparatus that is adapted to measure the weight, after sucking the liquid that is actually used in a measurement into the pipette chip that is actually used in the measurement while aiming to be sucked the preset volume and discharging the liquid sucked in the chip onto the measuring apparatus, and a means, provided in the arithmetic processing device, for calculating a ratio between the preset volume and the actual discharge volume and correcting a sucking amount so as to bring the sucking amount to match an amount obtained by multiplying the preset volume by the ratio.

It is another object of the present invention to provide an electric pipette comprising, a cylinder that is capable of communicating with a pipette chip attached for sucking and discharging a preset amount of liquid, a piston that is vertically moveable in the cylinder, a rotary motor for driving the piston, an arithmetic processing device for calculating and controlling rotating speed of the motor, a user interface that is equipped with a display, a means, provided in the user interface, for setting a preset weight, a means, provided in the arithmetic processing device, for determining an actual discharge weight of the pipette from weight of liquid measured by a measuring apparatus that is adapted to measure weight, after sucking the liquid that is actually used in a measurement into the pipette chip that is actually used in the measurement while aiming to be sucked the preset weight and discharging the liquid sucked in the chip onto the measuring apparatus, and a means, provided in the arithmetic processing device, for calculating a ratio between the preset weight and the actual discharge weight and correcting a sucking amount so as to be bring the sucking amount to match an amount obtained by multiplying the preset weight by the ratio.

It is a further object of the present invention to provide an electric pipette comprising, a cylinder that is capable of communicating with a pipette chip attached for sucking and discharging a preset amount of liquid, a piston that is vertically moveable in the cylinder, a rotary motor for driving the piston, an arithmetic processing device for calculating and controlling rotating speed of the motor, a user interface that is equipped with a display, a means, provided in the user interface, for setting a preset volume, a means, provided in the arithmetic processing device, for determining an actual discharge volume of the pipette based on weight of liquid measured by a measuring apparatus that is adapted to measure the weight, after sucking the liquid that is actually used in a measurement into the pipette chip that is actually used in the measurement while aiming to be sucked the preset volume and discharging the liquid sucked in the chip onto the measuring apparatus, and a means, provided in the arithmetic processing device, for correcting a displayed volume by defining the actual discharge volume as an accurate amount.

It is still further object of the present invention to provide an electric pipette comprising, a cylinder that is capable of communicating with a pipette chip attached for sucking and discharging a preset amount of liquid, a piston that is vertically moveable in the cylinder, a rotary motor for driving the piston, an arithmetic processing device for calculating and controlling rotating speed of the motor, a user interface that is equipped with a display, a means, provided in the user interface, for setting a preset weight, a means, provided in the arithmetic processing device, for determining an actual discharge weight of the pipette based on weight of liquid measured by a measuring apparatus that is adapted to measure the weight, after sucking the liquid that is actually used in a measurement into the pipette chip that is actually used in the measurement while aiming to be sucked the preset weight and discharging the liquid sucked in the chip onto the measuring apparatus, and a means, provided in the arithmetic processing device, for correcting a displayed weight by defining the actual discharge weight as an accurate amount.

In one mode of the electric pipette, the electric pipette further includes a means for displaying a discharge amount by weight in the display.

In another mode of the electric pipette, the electric pipette further includes a means for switching a measurement unit by choosing the measurement unit to be displayed and discharged by volume or weight.

EFFECTS OF INVENTION

In accordance with the present invention, since the method can calibrate the discharge volume by means of the pipette and the chip actually used in a measurement under environment of the measurement, those errors caused by the tip, the liquid, and the environmental conditions are eliminated so that the discharge volume can be calibrated easily and accurately.

In one mode of the present invention, after deciding a pipette, a chip, and a liquid for the measurement, a preset amount of the liquid is sucked into and discharged from the chip, an actual discharge amount of the liquid is defined, and a ratio between the preset amount and the actual discharge amount is calculated. The pipette is calibrated, that is, the pipette is adjusted, so as to match its sucking amount with an amount obtained by multiplying the preset amount by the ratio. In an alternative mode of the present invention, an actual discharge amount is inputted into the pipette to be displayed wherein the displayed amount is calibrated to represent the actual discharge amount. By performing both modes of the calibrations before the measurement, accurate discharging can easily achieved with these pipette, chip, or liquid.

Moreover, a simpler calibration can be performed by determining the preset amount of liquid by weight because the calibration can be done in a unified unit of weight. The actual discharge amount of the pipette is confirmed by weight using the measurement apparatus as in conventional calibrations. Thus, the primary physical control value is weight. It should be noted that the volume can be determined after the weight is converted into the volume using the density of liquid. Instead, when the discharge amount is first preset by weight without using the density of the liquid, such conversion can be eliminated, thereby simplifying the calibration can be performed.

Embodiments for Implementing Invention

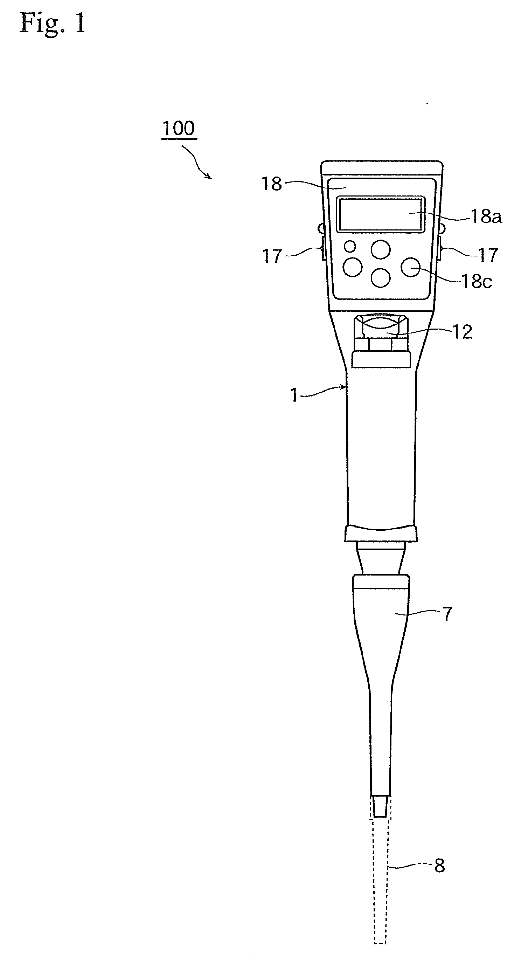

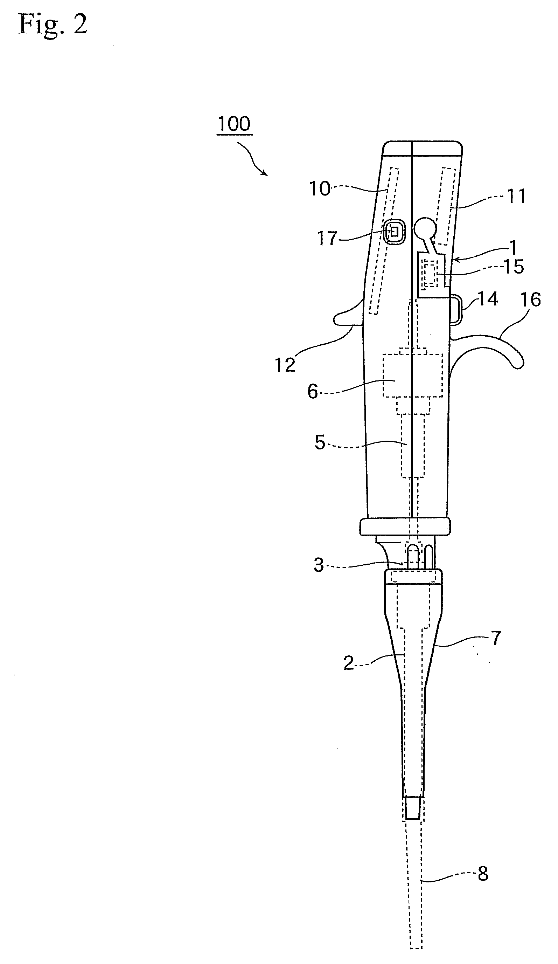

Preferred embodiments in accordance with the present invention will be described referring to the annexed drawings. Fig.1 is a front view of an electric pipette in accordance with an embodiment of the present invention. Fig.2 is a right side view of the electric pipette.

A symbol 100 denotes an electric pipette which is a manually operable micropipette having an entire length of approximately 280 mm. A symbol 1 denotes a vertically cylindrical main casing which is formed by combing a front casing and a rear casing. In the main casing 1, a cylinder 2 for sucking and discharging liquid, a piston 3 which reciprocally moves in a vertical direction in the cylinder 2, a ball screw 5 which is connected to the piston 3 and vertically moves the piston 3, and a stepping motor 6 which rotatably drives the ball screw 5 in forward and reverse directions are disposed.

A symbol 7 denotes a chip holder which constitutes a part of the main casing 1 and is detachably engaged with a bottom part of the main casing 1. For the assembling, the bottom part of the cylinder 2 which is tapered toward the downward direction is accommodated. A chip 8 for the pipette (shown in the figures with broken lines) is detachably attached at the bottom part of the chip holder 7 so as to be communicated with the bottom part of the cylinder 2. The liquid is sucked into and discharged from the chip 8. The chip 8 depicted in the figures is an example. Regarding the chip 8, various length and shapes are distributed with respect to, for example, a preset volume and difference of the liquid so that a user can arbitrarily choose with respect to his purpose.

In front surface of the electric pipette 100, a user interface 18 is disposed. The user interface 18 includes a liquid crystal panel (a display) 18a and an operation key 18c, parameters including a discharging amount and an operation mode of the pipette can be set up.

A release switch 12 for detaching the chip 8 is disposed below the user interface 18. The release switch 12 is mechanistically communicated with the chip holder 7, and the chip 8 is pushed down by pressing the release switch 12 toward the downward direction, and is detached from the chip holder 7.

An operation switch 14 for starting the operation is disposed in back surface of the electric pipette 100. A finger rest 16 acting as a support assistance during the operation and a stopper during the non-operation is disposed below the operation switch 14.

In the main casing 1, an electric board 10 disposed behind the user interface 18 and a rechargeable battery 11 disposed above the motor 6 for moving the electric board 10 and the motor 6 are accommodated.

A projecting charging point 17 for electrically conducting the rechargeable battery 11 to an external charging device is disposed on right and left side surface of the electric pipette 100, respectively.

The electric pipette 100 has two energy supply lines. A commercial power 152 is suppled from an energy connector 15 in the right side surface of the electric pipette 100 via an AC adapter 151 other than the rechargeable battery 11.

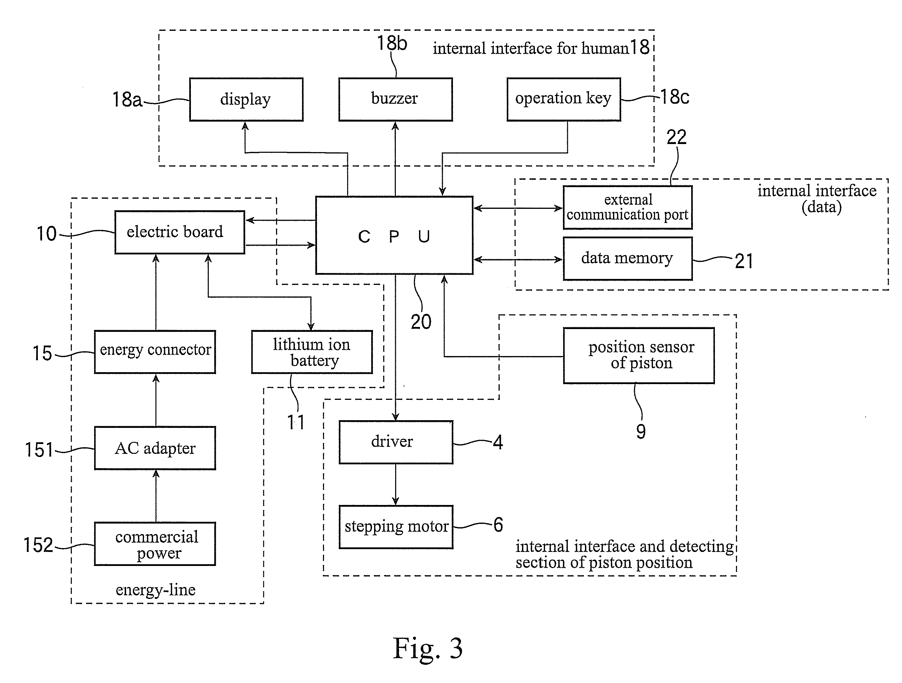

Fig.3 is a block diagram of the electric pipette. A symbol 20 denotes an arithmetic processing device acting as a core of a control and is communicated with the user interface 18. The arithmetic processing device 20 is moved from the operation key 18c and outputs signals to the display 18a and a sound-signal-buzzer 18b. The device 20 displays conditions of setting and controlling and results of the arithmetic processing while informing the user with a sound signal as needed.

A symbol 4 denotes a driver for controlling the stepping motor 6, a symbol 9 denotes a position sensor for detecting a position of the piston. The arithmetic processing device 20 inputs a rotating speed of the motor into the driver 4 in order to move the piston 3 in an aimed moving amount, after detecting the position of the piston 3 (zero point) from the signal of the position sensor 9. When the operation switch 14 is pushed, the motor 6 is rotated by controlling from the driver 4, the piston 3 moves vertically in the cylinder 2 via the ball screw 5, the inner pressure of the cylinder 2 is pressured or reduced, and the preset amount of the liquid is sucked or discharged.

A symbol 21 denotes a non-volatile data memory. A symbol 22 denotes an external communication port. The arithmetic processing device 20 outputs signals to the data memory 21 including the controlling, the setting and the result of the arithmetic processing, and readouts those data from the data memory 21. The arithmetic processing device 20 may have intercommunication with an external personal computer via the external communication port 22.

Next, calibration methods in accordance with the embodiments by utilizing the electric pipette 100 will be described. In each of the embodiments, it should be noted that the method is performed by using the pipette 100, the chip 8, and the liquid which are used in the actual measurement, under the environment of the measurement.

(First embodiment of the calibration method)

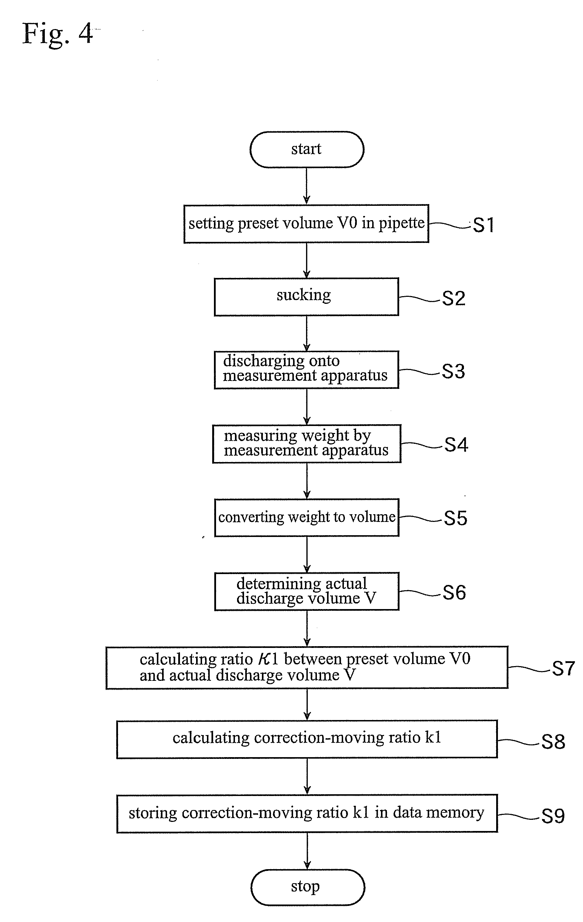

Fig.4 is a flow chart regarding a first calibration method of the electric pipette. At a step S0 as an advance step, the pipette 100 and the chip 8 actually used in a measurement are chosen and the liquid actually used in the measurement is prepared.

When a first calibration mode is chosen, the processing is shifted to a step S1, a preset volume parameter V0 [unit: L/ mL/ micro L] is set by choosing or inputting from the operation key 18c. The chosen or inputted value is displayed on the display 18a.

Then, the processing is shifted to a step S2, the liquid is sucked in the chip 8 by pushing the operation switch 14.

Then, the processing is shifted to a step S3, the liquid is discharged on a weight apparatus which can measure weight of the liquid by pushing the operation switch 14. The resolving power of the weight apparatus is selected with respect to the preset volume. For example, when the pipette is set the preset volume, 20 micro L, read accuracy is required in 0.1 micro L. Therefore, a measurement order of the volume of the liquid is required one decimal order smaller than the 0.1 micro L, 10 nano L, so that a semi-micro balance is required for the weight apparatus.

Then, the processing is shifted to a step S4, a measurement weight "G" [unit: g/ mg/ micro g] is measured by the weight apparatus.

Then, the processing is shifted to a step S5, the measurement weight "G" is converted to volume. In the converting, the density of the liquid is required at least. The volume may be calibrated by dividing the measurement weight "G" by a predetermined density of the liquid obtained by a densimeter. Considering the density change and/or the buoyancy change of the liquid with respect to the temperature or humidity is preferable. The arithmetic processing may be used an arbitrary program in an external personal computer.

Then, the processing is shifted to a step S6, a message to require inputting an actual discharge volume "V" of the liquid in the display 18a. A user inputs the value of the actual discharged volume "V" obtained at the step S5 from the operation key 18c and defines the actual discharged volume "V" [L/ mL/ micro L].

Then, the processing is shifted to a step S7, the arithmetic processing device 20 calculates a ratio "$\kappa\alpha\pi\pi\alpha$ 1" between the preset volume "V0" and the actual discharge volume "V" such that the ratio "$\kappa$ 1"= V0/V. For example, when the preset volume "V0" is 100 [micro L] and the actual discharge volume "V" is 90 [micro L], $\kappa$ 1 = V0/V = 1.11.

Then, the processing is shifted to a step S8, the arithmetic processing device 20 calculates a correction-moving ratio "k1" of the piston 3 from an equation (1).

$$k1 = k0 * \kappa\,1 \qquad .....(1)$$

where "k0" is an initial correction-moving ratio of the piston with respect to the preset volume "V0".

Then, the processing is shifted to a step S9, the arithmetic processing device 20 outputs the correction-moving ratio "k1" of the piston to the data memory 21. The data memory 21 stores the correction-moving ratio "k1" of the piston, and the calibration is ended.

In the measurement after the calibration, since the correction-moving ratio "k1" of the piston stored by the calibration is used, the actual discharge volume accurately matches the preset volume.

Thus, during the measurement, when the user inputs the arbitrary preset volume "v" to the electric pipette 100, the arithmetic processing device 20 readouts the correction-moving ratio "k1" obtained by the calibration from the data memory 21, and calculates a moving amount "d1" of the piston 3 from an equation (2).

$$d1 = k1 * v \qquad .....(2)$$

The arithmetic processing device 20 inputs a value of the moving amount "d1" to the driver 4 and controls the rotating speed of the motor 6. In this manner, a sucking amount which is set the preset volume "v" is changed to an corrected volume "v'" (v'=v * $\kappa$ 1 [L/ mL/ micro L]). An example is showed below. In the calibration, the ratio $\kappa$ 1=V0/V=1.11 is obtained and the correction-moving ratio "k1" is stored. Then, in the measurement, when the preset volume "v" is 100 [micro L], the rotating speed of the motor 6 is changed by reading out the correction-moving ratio "k1", the electric pipette 100 is adjusted so as to suck the corrected volume "v'", v' =v * $\kappa$ 1=111 [micro L], and the actual discharge volume matches 100 [micro L]. Thus, since the electric pipette 100 is adjusted so as to suck the corrected volume "v'" which is considered errors with respect to an arbitrary preset volume "v", the actual discharge volume matches the preset volume "v".

(Second embodiment of the calibration method)

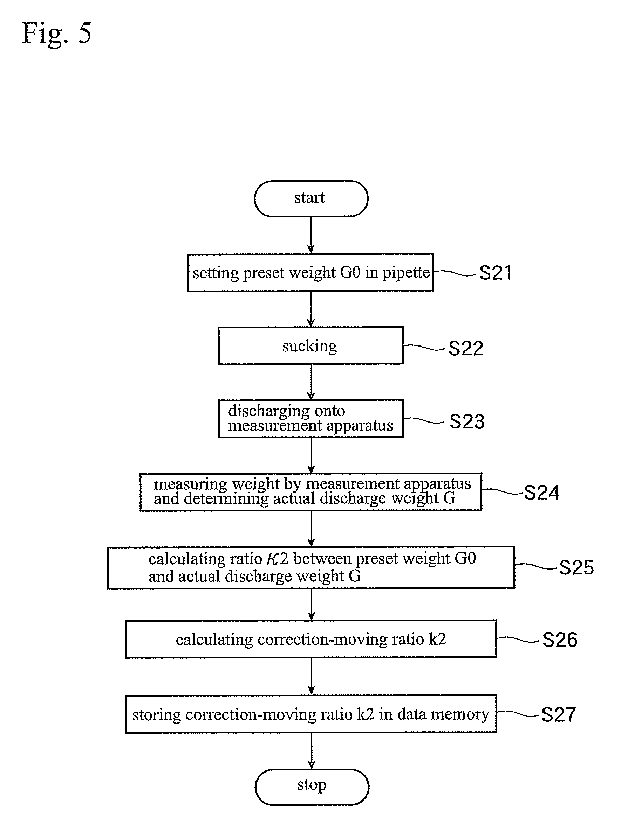

Fig.5 is a flow chart regarding a second calibration method of the electric pipette. The second calibration method can be performed a simpler calibration than the first calibration method by unifying unit of the preset amount by weight. The description of the steps which are similar to that of the first embodiment are omitted by using the same step number.

When a second calibration mode is chosen, the processing is shifted to a step S21. The step S21 is similar to the step S1 in the first calibration method. A different point is that the preset amount is performed by weight. In the step S21, the preset amount is set by choosing or inputting of a preset weight "G0" [unit: g/ mg/ micro g].

Next, the processing is shifted to steps S22, S23, and S24 and the liquid is sucked in the chip 8 and discharged on the weight apparatus as steps S2, S3, and S4. The measurement weight "G" [unit: g/ mg/ micro g] is measured and inputted, and an actual discharge weight is directly determined by inputting the measurement weight "G". In the second calibration method, since the unit is unified by weight, the measurement weight "G" is the actual weight "G". The steps S5 and S6 in the first embodiment can be eliminated.

Next, a step S25 is similar to the step S7. In the step S25, the arithmetic processing device 20 calculates a ratio "$\kappa$ 2" between the preset weight "G0" and the actual discharge weight "G".

The processing is shifted to steps S26, the arithmetic processing device 20 calculates a correction-moving ratio "k2" of the piston 3 from an equation (3).

$$k2 = k0 * \kappa 2 \qquad .....(3)$$

where "k0" is an initial correction-moving ratio of the piston with respect to the preset weight "G0".

The processing is shifted to steps S27, the arithmetic processing device 20 outputs the correction-moving ratio "k2" of the piston to the data memory 21. The data memory 21 stores the correction-moving ratio "k2" of the piston, and the calibration is ended.

In the measurement, when the user inputs an arbitrary preset weight "g" to the electric pipette 100, the arithmetic processing device 20 readouts the correction-moving ratio "k2" obtained by the calibration from the data memory 21, and calculates a moving amount "d2" of the piston 3 from an equation (4).

$$d2 = k2 * g \qquad .....(4)$$

The arithmetic processing device 20 inputs a value of the moving amount "d2" to the driver 4 and controls the rotating speed of the motor 6. In this manner, the sucking amount which is set the preset weight "g" is changed to an corrected weight "g'" (g'=g * $\kappa$ 2 [g/ mg/ micro g]). In accordance with the first calibration method, since the electric pipette 100 is adjusted so as to suck the corrected weight "g'" which is considered errors with respect to the arbitrary preset weight "g", the actual discharge weight matches the preset weight "g".

(Third embodiment of the calibration method)

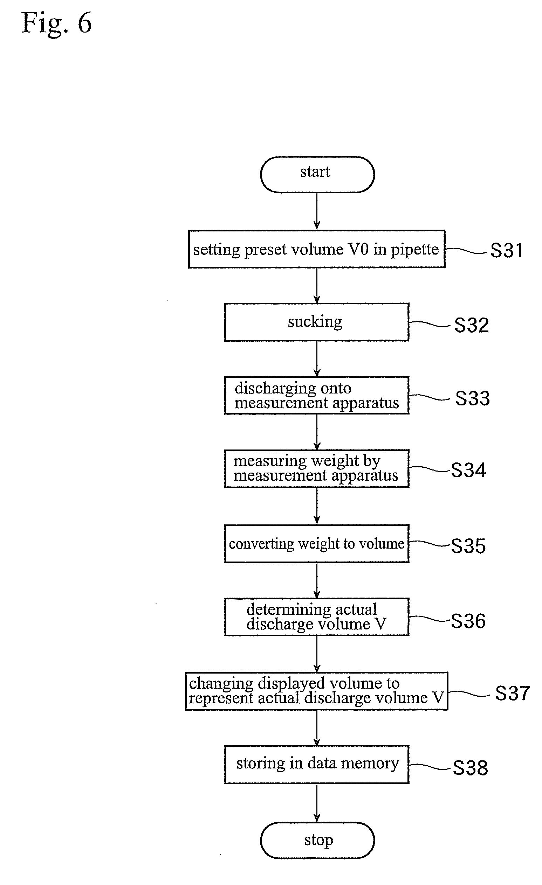

Fig.6 is a flow chart regarding a third calibration method of the electric pipette. The third calibration method calibrates a displayed amount with respect to the first calibration method which corrects the sucking amount. The description of the steps which are similar to that of the first embodiment are omitted by using the same step number.

When a third calibration mode is chosen, the processing is shifted to steps S31 to S36. The steps S31 to S36 are similar to the steps S1 to S6.

Then, the processing is shifted to a step S37, the arithmetic processing device 20 changes the preset volume "V0" displayed in the display 18a to the actual discharge volume "V" obtained in the step S36.

The processing is shifted to a step S38, the data memory 21 stores information regarding the present calibration, and the calibration is ended.

(Forth embodiment of the calibration method)

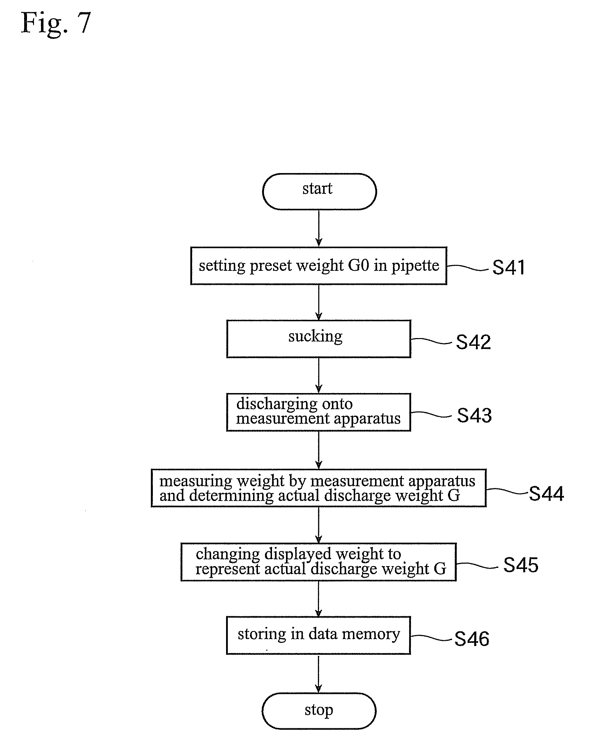

Fig.7 is a flow chart regarding a forth calibration method of the electric pipette. The forth calibration method unifies the unit of the preset amount by weight with respect to the third calibration method. The description of the steps which are similar to that of the third embodiment are omitted by using the same step number.

When a firth calibration mode is chosen, the processing is shifted to a step S41. While the step S41 is similar to the step S31 of the third calibration method, in the step S41, the preset amount is set by choosing or inputting of the preset weight "G0" [unit: g/ mg/ micro g].

The processing is shifted to steps S42, S43, and S44, the liquid is sucked in the chip 8 and discharged on the weight apparatus, and the measurement weight "G" [unit: g/ mg/ micro g] is measured as the steps S32, S33, and S34. In the fourth calibration method, the measurement weight "G" equals the actual discharge weight "G" so that the steps S35 and S36 in the third embodiment can be eliminated.

The processing is shifted to a step S45, the arithmetic processing device 20 changes the preset weight "G0" displayed in the display 18a to the actual discharge weight "G" obtained in the step S44.

The processing is shifted to a step S46, the data memory 21 stores information regarding the present calibration, and the calibration is ended.

In accordance with the first and second calibration methods, the actual discharge amount is calibrated so as to match the preset amount by changing the rotating speed of the motor and sucking including errors using the ratio between the preset amount and the discharge amount. In accordance with the third and fourth calibration methods, instead of changing the rotating speed of the motor, the displayed amount is corrected so as to match the actual discharge amount. Therefore, the actual discharge amount is leaded so as to match the preset amount gradually.

Each of the first to forth calibration methods can calibrate the actual discharge amount by means of the pipette and the chip actually used in the measurement under the measurement environment so that those errors caused by the tip, the liquid, and the environmental conditions can be eliminated. In accordance with the calibration methods, the calibration can be performed easily and accurately.

Moreover, a further easy calibration can be performed in the second and forth calibration methods because the conversion process of the measurement unit can be eliminated by determining the preset amount of the liquid by weight.

While the calibration methods in the embodiments are described by using the electric pipette 100, the first and second calibration methods can be performed by using a manual operation pipette (hereinafter, referred to as "a manual pipette"). The manual pipette has a configuration including a cylinder that is communicated with a pipette chip attached for sucking and discharging a preset amount of liquid, a piston that is vertically moveable in the cylinder, a driver for moving the piston (screw mechanism) and a controller for controlling the driver by engaging the driver (an adjustment knob). Therefore, the first and second calibration methods can be performed with the manual pipette by rotating the adjustment knob manually and sucking the corrected volume "v' " or the corrected weight "g'".

In other words, performing the calibration method of the embodiments by the electric pipette achieves a further easier calibration than the manual pipette because adjustment of the stroke of the piston 3 with respect to the preset amount in the electric pipette can be performed by only inputting the value of the rotating speed of the motor 6.

In the second and fourth calibration methods, the measurement weight "G" obtained at the step S24 or S44 may be obtained directly from the measurement apparatus via a RS-232C cable and the external communication port 22 instead of the inputting. In the first and third calibration methods, the results of the converting the measurement unit may be obtained directly from an external arithmetic processing device (a personal computer) via the external communication port 22 instead of the inputting.

The first and second calibration methods can be applied to a measurement of the volume of the liquid in which the actual discharge volume is determined accurately by discarding a superfluous volume when the sucked volume exceeds the preset volume.

The arithmetic processing device 20 of the electric pipette 100 may be equipped a means for displaying values by weight in the display 18a (a weight display means) not only in the calibration but also in the measurement.

The arithmetic processing device 20 of the electric pipette 100 may be equipped a means which the user can choose a measurement unit arbitrarily (a measurement unit switching means). When the user chooses the measurement unit from the user interface 18, the arithmetic processing device 20 automatically choose whether the measurement is displayed and discharged (dispensed) by volume or weight.

Recently, the pipette is used as a tool for controlling an amount of liquid in biotechnology field, medicine manufacture, food industry, cosmetics industry, clinical study field, industrial product, and environmental measurement field. In these job sites, it is often the cases that mixing is performed by weight, for example, diluting a liquid by a weight ratio and making a solution by mixing a solvent measured by the pipette (mL) and a solute measured by the measurement apparatus (mg). However, since conventional pipettes are only equipped a means for displaying by volume (displaying by "L"). In the conventional pipettes, the measurement unit is not unified, mistaking a distribution of the mixing is frequently occurring. In the conventional pipettes, the density of the liquid is required in order to convert the unit. Instead, the electric pipette 100 can eliminate bothersome process described above and is equipped the means which the user can choose the measurement unit arbitrarily so that the mistakes of the distribution of the mixing can be reduced.

Brief Description of Drawings

[Fig.1] A front view of an electric pipette in accordance with an embodiment of the present invention.
[Fig.2] A right side view of the electric pipette.
[Fig.3] A block diagram of the electric pipette.
[Fig.4] A flow chart regarding a first calibration method of the electric pipette.
[Fig. 5] A flow chart regarding a second calibration method of the electric pipette.
[Fig.6] A flow chart regarding a third calibration method of the electric pipette.
[Fig.7] A flow chart regarding a fourth calibration method of the electric pipette.

Description of Symbols

1       main casing
2       cylinder
3       piston
4       driver
5       boll screw
6       motor
7       chip holder
8       pipette chip
9       position sensor of piston
10      electric board
11      rechargeable battery
12      release switch
14      operation switch
15      energy connector
151     AC adapter
152     commercial power
16      finger rest
17      charging point
18      user interface
18a     display
18b     sound-signal-buzzer
18c     operation key
20      arithmetic processing device
21      data memory
22      external communication port
100     electric pipette

**Claims**

1. A method for calibrating discharge volume of a pipette, the pipette including a cylinder that is capable of communicating with a pipette chip attached for sucking and discharging a preset amount of liquid, a piston that is vertically moveable in the cylinder, a driver for moving the piston, and a controller for controlling the driver, the method comprising the steps of:

    setting a preset volume by the pipette that is actually used in a measurement;
    sucking liquid that is actually used in the measurement into the pipette chip that is actually used in the measurement while aiming to be sucked the preset volume;
    discharging the liquid sucked in the pipette chip onto a measuring apparatus that is adapted to measure weight of the liquid;
    determining an actual discharge volume of the pipette based on the weight measured; and
    calculating a ratio between the preset volume and the actual discharge volume and correcting a sucking amount so as to bring the sucking amount to match an amount obtained by multiplying the preset volume by the ratio.

2. A method for calibrating discharge volume of a pipette, the pipette including a cylinder that is capable of communicating with a pipette chip attached for sucking and discharging a preset amount of liquid, a piston that is vertically moveable in the cylinder, a driver for moving the piston, and a controller for controlling the driver, the method comprising the steps of:

    setting a preset weight by the pipette that is actually used in a measurement;
    sucking liquid that is actually used in the measurement into the pipette chip that is actually used in the measurement while aiming to be sucked the preset weight;
    discharging the liquid sucked in the pipette chip onto a measuring apparatus that is adapted to measure weight of the liquid;
    determining an actual discharge weight of the pipette from the weight measured; and
    calculating a ratio between the preset weight and the actual discharge weight and correcting a sucking amount so as to bring the sucking amount to match an amount obtained by multiplying the preset weight by the ratio.

3. A method for calibrating discharge volume of a pipette, the pipette including a cylinder that is capable of communicating with a pipette chip attached for sucking and discharging a preset amount of liquid, a piston that is vertically moveable in the cylinder, a driver for moving the piston, and a controller for controlling the driver, the method comprising the steps of:

    setting and displaying a preset volume by the pipette that is actually used in a measurement;
sucking liquid that is actually used in the measurement into the pipette chip that is actually used in the measurement while aiming to be sucked the preset volume;
discharging the liquid sucked in the pipette chip onto a measuring apparatus that is adapted to measure weight of the liquid;
determining an actual discharge volume of the pipette based on the weight measured; and
correcting a displayed volume by defining the actual discharge volume as an accurate amount.

4. A method for calibrating discharge volume of a pipette, the pipette including a cylinder that is capable of communicating with a pipette chip attached for sucking and discharging a preset amount of liquid, a piston that is vertically moveable in the cylinder, a driver for moving the piston, and a controller for controlling the driver, the method comprising the steps of:

setting and displaying a preset weight by the pipette that is actually used in a measurement;
sucking liquid that is actually used in the measurement into the pipette chip that is actually used in the measurement while aiming to be sucked the preset weight;
discharging the liquid sucked in the pipette chip onto a measuring apparatus that is adapted to measure weight of the liquid;
determining an actual discharge weight of the pipette from the weight measured; and
correcting a displayed weight by defining the actual discharge weight as an accurate amount.

5. An electric pipette comprising:

a cylinder that is capable of communicating with a pipette chip attached for sucking and discharging a preset amount of liquid;
a piston that is vertically moveable in the cylinder;
a rotary motor for driving the piston;
an arithmetic processing device for calculating and controlling rotating speed of the motor;
a user interface that is equipped with a display;
a means, provided in the user interface, for setting a preset volume;
a means, provided in the arithmetic processing device, for determining an actual discharge volume of the pipette based on weight of liquid measured by a measuring apparatus that is adapted to measure the weight, after sucking the liquid that is actually used in a measurement into the pipette chip that is actually used in the measurement while aiming to be sucked the preset volume and discharging the liquid sucked in the chip onto the measuring apparatus; and
a means, provided in the arithmetic processing device, for calculating a ratio between the preset volume and the actual discharge volume and correcting a sucking amount so as to bring the sucking amount to match an amount obtained by multiplying the preset volume by the ratio.

6. An electric pipette comprising:

a cylinder that is capable of communicating with a pipette chip attached for sucking and discharging a preset amount of liquid;
a piston that is vertically moveable in the cylinder;
a rotary motor for driving the piston;
an arithmetic processing device for calculating and controlling rotating speed of the motor;
a user interface that is equipped with a display;
a means, provided in the user interface, for setting a preset weight;
a means, provided in the arithmetic processing device, for determining an actual discharge weight of the pipette from weight of liquid measured by a measuring apparatus that is adapted to measure weight, after sucking the liquid that is actually used in a measurement into the pipette chip that is actually used in the measurement while aiming to be sucked the preset weight and discharging the liquid sucked in the chip onto the measuring apparatus; and
a means, provided in the arithmetic processing device, for calculating a ratio between the preset weight and the actual discharge weight and correcting a sucking amount so as to be bring the sucking amount to match an amount obtained by multiplying the preset weight by the ratio.

7. An electric pipette comprising:

a cylinder that is capable of communicating with a pipette chip attached for sucking and discharging a preset amount of liquid;
a piston that is vertically moveable in the cylinder;
a rotary motor for driving the piston;
an arithmetic processing device for calculating and controlling rotating speed of the motor;
a user interface that is equipped with a display;
a means, provided in the user interface, for setting a preset volume;
a means, provided in the arithmetic processing device, for determining an actual discharge volume of the pipette based on weight of liquid measured by a measuring apparatus that is adapted to measure the weight, after sucking the liquid that is actually used in a measurement into the pipette chip that is actually used in the measurement while aiming to be sucked the preset volume and discharging the liquid sucked in the chip onto the measuring apparatus; and a means, provided in the arithmetic processing device, for correcting a displayed volume by defining the actual discharge volume as an accurate amount.

8. An electric pipette comprising:

a cylinder that is capable of communicating with a pipette chip attached for sucking and discharging a preset amount of liquid;
a piston that is vertically moveable in the cylinder;
a rotary motor for driving the piston;
an arithmetic processing device for calculating and controlling rotating speed of the motor;
a user interface that is equipped with a display;
a means, provided in the user interface, for setting a preset weight;
a means, provided in the arithmetic processing device, for determining an actual discharge weight of the pipette based on weight of liquid measured by a measuring apparatus that is adapted to measure the weight, after sucking the liquid that is actually used in a measurement into the pipette chip that is actually used in the measurement while aiming to be sucked the preset weight and discharging the liquid sucked in the chip onto the measuring apparatus; and
a means, provided in the arithmetic processing device, for correcting a displayed weight by defining the actual discharge weight as an accurate amount.

9. The electric pipette as claimed in any one of claims 5 to 8, further comprising:

a means for displaying a discharge amount by weight in the display.

10. The electric pipette as claimed in any one of claims 5 to 9, further comprising:

a means for switching a measurement unit by choosing the measurement unit to be displayed and discharged by volume or weight.

Fig. 1

Fig. 2

Fig. 3

# Fig. 4

```
start
  │
  ▼
setting preset volume V0 in pipette ──── S1
  │
  ▼
sucking ──── S2
  │
  ▼
discharging onto
measurement apparatus ──── S3
  │
  ▼
measuring weight by
measurement apparatus ──── S4
  │
  ▼
converting weight to volume ──── S5
  │
  ▼
determining actual
discharge volume V ──── S6
  │
  ▼
calculating ratio K1 between preset volume V0
and actual discharge volume V ──── S7
  │
  ▼
calculating correction-moving ratio k1 ──── S8
  │
  ▼
storing correction-moving ratio k1 in data memory ──── S9
  │
  ▼
stop
```

# Fig. 5

```
        ( start )
            │
            ▼
 setting preset weight G0 in pipette ── S21
            │
            ▼
         sucking ── S22
            │
            ▼
     discharging onto
   measurement apparatus ── S23
            │
            ▼
 measuring weight by measurement apparatus
 and determining actual discharge weight G ── S24
            │
            ▼
 calculating ratio K2 between preset weight G0
 and actual discharge weight G ── S25
            │
            ▼
 calculating correction-moving ratio k2 ── S26
            │
            ▼
 storing correction-moving ratio k2 in data memory ── S27
            │
            ▼
         ( stop )
```

# Fig. 6

```
        ┌─────────┐
        │  start  │
        └─────────┘
             │
             ▼
┌──────────────────────────────┐
│ setting preset volume V0 in pipette │──── S31
└──────────────────────────────┘
             │
             ▼
      ┌──────────────┐
      │   sucking    │──── S32
      └──────────────┘
             │
             ▼
   ┌────────────────────┐
   │  discharging onto   │──── S33
   │ measurement apparatus │
   └────────────────────┘
             │
             ▼
   ┌────────────────────┐
   │  measuring weight by │──── S34
   │ measurement apparatus │
   └────────────────────┘
             │
             ▼
  ┌─────────────────────┐
  │ converting weight to volume │──── S35
  └─────────────────────┘
             │
             ▼
   ┌────────────────────┐
   │  determining actual  │──── S36
   │  discharge volume V  │
   └────────────────────┘
             │
             ▼
┌────────────────────────────────┐
│ changing displayed volume to     │──── S37
│ represent actual discharge volume V │
└────────────────────────────────┘
             │
             ▼
   ┌────────────────────┐
   │ storing in data memory │──── S38
   └────────────────────┘
             │
             ▼
        ┌─────────┐
        │  stop   │
        └─────────┘
```

# Fig. 7

start

setting preset weight G0 in pipette ——— S41

sucking ——— S42

discharging onto
measurement apparatus ——— S43

measuring weight by measurement apparatus
and determining actual discharge weight G ——— S44

changing displayed weight to
represent actual discharge weight G ——— S45

storing in data memory ——— S46

stop

## INTERNATIONAL SEARCH REPORT

| International application No. |
| --- |
| PCT/JP2013/080544 |

**A. CLASSIFICATION OF SUBJECT MATTER**
*B01L3/02*(2006.01)i, *G01F13/00*(2006.01)i, *G01F25/00*(2006.01)i, *G01N1/00* (2006.01)i

According to International Patent Classification (IPC) or to both national classification and IPC

**B. FIELDS SEARCHED**

Minimum documentation searched (classification system followed by classification symbols)
B01L1/00-99/00, G01F13/00, G01F25/00, G01N1/00-1/34

Documentation searched other than minimum documentation to the extent that such documents are included in the fields searched
Jitsuyo Shinan Koho          1922-1996     Jitsuyo Shinan Toroku Koho    1996-2014
Kokai Jitsuyo Shinan Koho     1971-2014     Toroku Jitsuyo Shinan Koho    1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2007-526116 A (Thermo Electron Oy), 13 September 2007 (13.09.2007), claims; paragraphs [0003], [0019] to [0026]; fig. 1 & US 2007/0283743 A1    & EP 1725332 A1 & WO 2005/079988 A1 | 1-10 |
| A | JP 2013-503032 A (PZ HTL Spolka Akcyjna), 31 January 2013 (31.01.2013), paragraphs [0010] to [0012] & US 2012/0148459 A1    & EP 2470302 A2 & WO 2011/025399 A2 | 1-10 |

☒ Further documents are listed in the continuation of Box C.          ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 07 January, 2014 (07.01.14) | 21 January, 2014 (21.01.14) |

| Name and mailing address of the ISA/ Japanese Patent Office | Authorized officer |
| --- | --- |
| Facsimile No. | Telephone No. |

Form PCT/ISA/210 (second sheet) (July 2009)

## INTERNATIONAL SEARCH REPORT

| International application No. |
| --- |
| PCT/JP2013/080544 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-520695 A  (Gilson S.A.S.),<br>26 July 2007 (26.07.2007),<br>paragraph [0048]<br>& US 2005/0118069 A1     & US 2008/0271514 A1<br>& EP 1541235 A1         & EP 1541975 A1<br>& EP 1687089 A1         & EP 1695200 A2<br>& EP 1543879 A1         & EP 1632840 A1<br>& EP 1634648 A1         & WO 2005/052781 A2<br>& WO 2005/051543 A1     & WO 2005/053848 A1 | 1-10 |
| A | JP 2010-227933 A  (Eppendolf AG.),<br>14 October 2010 (14.10.2010),<br>claims; paragraphs [0002], [0003], [0011],<br>[0047], [0048], [0054] to [0060]<br>& US 2008/0011042 A1     & EP 1878500 A1<br>& EP 2286921 A1 | 1-10 |
| A | JP 2011-80964 A  (Beckman Coulter, Inc.),<br>21 April 2011 (21.04.2011),<br>claims; paragraph [0060]<br>& US 2012/0196374 A1     & EP 2487491 A1<br>& WO 2011/043073 A1 | 1-10 |
| A | JP 2009-294186 A  (Ohm Electric Co., Ltd.),<br>17 December 2009 (17.12.2009),<br>paragraphs [0007] to [0031]<br>(Family: none) | 1-10 |

Form PCT/ISA/210 (continuation of second sheet) (July 2009)

**EP 3 069 790 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010227933 A